# EUROPEAN PATENT SPECIFICATION

(11) **EP 2 913 959 B1**
(45) Date of publication and mention of the grant of the patent: **10.04.2019**
(21) Application number: 14157162.0
(22) Date of filing: 28.02.2014
(51) Int. Cl.: H04L 12/28, G08B 25/00

(54) **Voice-call system**
Sprachanrufsystem
Système d'appel vocal

(43) Date of publication of application: 02.09.2015
(73) Proprietor: Panasonic Corporation, Kadoma-shi Osaka 571-8501 (JP); Securitas Direct AB, 201 23 Malmö (SE)
(72) Inventor: Nagai, Shoji, Chuo-ku, Osaka 540-6207 (JP); Fukushima, Minoru, Chuo-ku, Osaka 540-6207 (JP); Washi, Teppei, Chuo-ku, Osaka 540-6207 (JP); Mochihara, Yoshihisa, Chuo-ku, Osaka 540-6207 (JP); Ando, Shinichiro, Chuo-ku, Osaka 540-6207 (JP); Hovang, Dan, 201 23 Malmö (SE)
(74) Representative: Appelt, Christian W.

(56) References cited:
- US-A1- 2005 038 326
- US-A1- 2005 174 229
- US-A1- 2009 243 878
- US-B1- 7 167 451

## Description

### TECHNICAL FIELD

The present invention relates to voice-call systems, and more specifically to a voice-call system that allows a resident staying in a residence to notify, by voice, a company that provides security service.

### BACKGROUND ART

Conventionally, a sensor network system is disclosed where a server collects measurement information of sensor nodes installed in a plurality of residences via a wide area network such as the Internet (for example, JP2011-216973).

In the sensor network system disclosed in JP2011-216973, an e-mail address used by a user of each residence is set in a server. When a sensor node installed in any residence detects occurrence of an emergency situation, the server creates an e-mail including an emergency message and transmits it to the e-mail address of the corresponding user. Thus, the server can notify a user being out of the residence of the emergency situation having occurred in the residence.

In the sensor network system of JP2011-216973, however, a user (resident) staying in the residence cannot report, by voice, an abnormality such as an emergency situation to a contact person of a company that provides security service.

Document US 2005/038326 A1 discloses a system for remote monitoring and servicing using a gateway to collect user information, such as physiological, audio, video, and proximity information. The gateway processes the user information locally, and may send the information to remote service providers through head-end servers. The gateway also allows service provider information to be conveyed from the service providers to the users.

Document US 2009/0243878 A1 discloses a frequency transmitter and receiver system and apparatus to facilitate communication, care and intervention during critical events. The system communicates with medical monitors and sensors, which measure and collect a subject's physiological data and vital signs information.

Document US 7 167 451 B1 discloses a call adaptation system tracking adaptation schemes used for transmitting audio packets in a Voice Over IP call. A user response to the Voice Over IP (VoIP) call is monitored.

### SUMMARY OF THE INVENTION

The present invention provides a voice-call system that allows a resident staying in a residence to make a notification by voice with a simple operation.

A voice-call system of the present invention includes a gateway, at least one voice-call terminal, a monitoring device, and a server device. The gateway is configured to collect monitoring information from a monitoring terminal installed in a residence. The voice-call terminal includes an operation section operated to start a notification by voice, a microphone, and a speaker. The monitoring device is used by a company that provides security service. The server device is configured to relay communication between the gateway and monitoring device. The server device is configured to transfer, to the monitoring device, data based on the monitoring information transmitted from the gateway, and transfer, to the gateway, data including a control command transmitted from the monitoring device. When the operation section is operated, the voice-call terminal is configured to transmit, to the gateway, a first speech signal of the resident converted into an electric signal by the microphone, and output, by voice from the speaker, a second speech signal transmitted from the monitoring device via the server device and gateway.

In this voice-call system, preferably, the communication method between the voice-call terminal and the gateway is a short-range radio communication method that requires no license.

In this voice-call system, preferably, the communication method between the monitoring device and the server device is a data communication method using a public telecommunications network.

Preferably, this voice-call system includes a communication terminal coupled to the server device via a public telecommunications network, and the gateway and communication terminal are configured so that data including the first or second speech signal is transmitted and received between the gateway and the communication terminal via the server device.

In this voice-call system, preferably, the gateway and the voice-call terminal are configured to packetize the first or second speech signal to communicate with each other, and the gateway is configured to change the packet size of the first or second speech signal.

In this voice-call system, preferably, radio communication is performed between the gateway and the voice-call terminal, and the gateway is configured to change the packet size of the first or second speech signal based on a received signal strength measured by the voice-call terminal.

In this voice-call system, preferably, the gateway is configured to change the packet size of the first or second speech signal based on a packet loss rate measured by the voice-call terminal.

In this voice-call system, preferably, the type of the voice-call terminal is any one of a wall-mounted type, a pendant type having a string for suspension, and a standing type.

In this voice-call system, preferably, the voice-call terminal includes a plurality of voice-call terminals that are disposed in the residence, and the gateway is configured so that both of unicast communication and multicast communication are allowed between the gateway and each of the plurality of voice-call terminals.

### BRIEF DESCRIPTION OF DRAWINGS

Fig. 1 is a system configuration diagram of a voice-call system of an embodiment.
Fig. 2 is a block diagram of a voice-call terminal included in the voice-call system of the embodiment.
Fig. 3 is an outward appearance of a wall-mounted voice-call terminal included in the voice-call system of the embodiment.
Fig. 4 is an outward appearance of a pendant type voice-call terminal included in the voice-call system of the embodiment.
Fig. 5 is an outward appearance of a standing type voice-call terminal included in the voice-call system of the embodiment.
Fig. 6 is a block diagram showing another configuration of the voice-call terminal included in the voice-call system of the embodiment.

### DESCRIPTION OF EMBODIMENTS

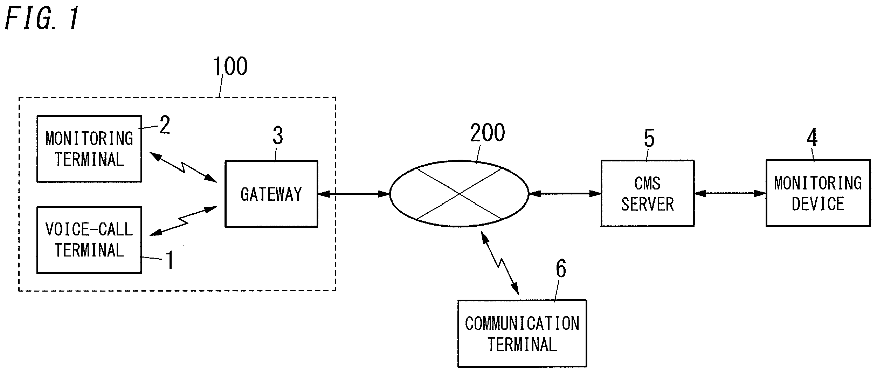

The embodiment of a voice-call system according to the present invention is described with reference to Fig. 1 to Fig. 6.

Fig. 1 is a schematic system configuration diagram of the voice-call system. The voice-call system includes a voice-call terminal 1, a monitoring terminal 2, a gateway 3, a monitoring device 4, and a CMS (content management system) server 5 (server device). In the configuration example of Fig. 1, the number of voice-call terminals 1 is one, and the number of monitoring terminals 2 is one. However, the number of voice-call terminals 1 and the number of monitoring terminals 2 may be changed appropriately.

The voice-call system is applied to a residence 100 in which a resident under contract with a company to use its security service lives. Here, the company provides security service such as crime-prevention, disaster prevention, or a response to an emergency call. The voice-call system is configured so that, using the voice-call terminal 1 in the residence 100, the resident in the residence 100 reports, by voice, an abnormality such as an emergency situation or sudden illness to an operator of the monitoring device 4 managed by the company that provides the security service.

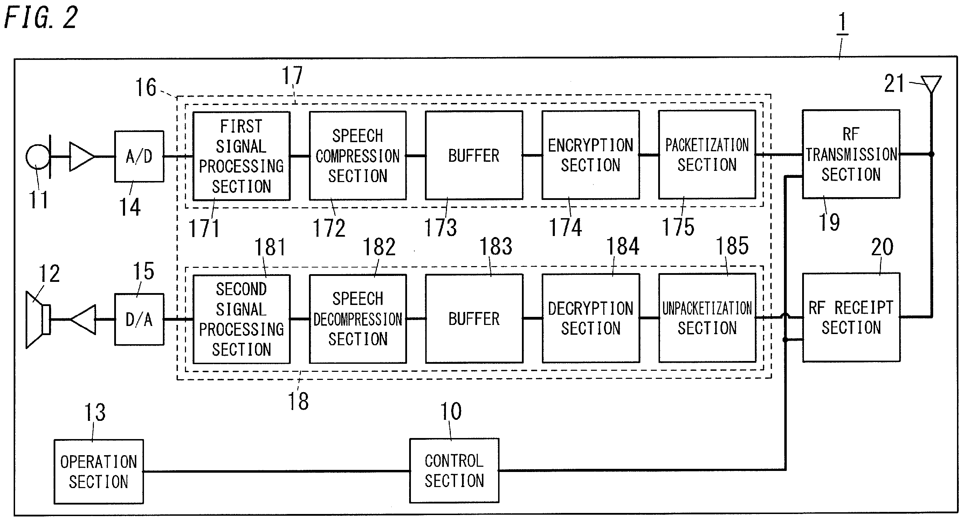

As shown in Fig. 2, the voice-call terminal 1 includes a microphone 11, a speaker 12, and an operation section 13 operated to start a notification by voice. The voice-call terminal 1 of the present embodiment further includes a control section 10, an A/D (analog-to-digital) converting section (A/D) 14, a D/A (digital-to-analog) converting section (D/A) 15, a speech processing section 16, an RF (radio frequency) transmission section 19, an RF receipt section 20, and an antenna 21.

The control section 10 includes a microcomputer, for example, and is configured to totally control the voice-call terminal 1.

The A/D converting section 14 is configured to convert, into a digital signal, a speech signal (first speech signal) that has been converted into an electric signal by the microphone 11 and amplified by an amplifier, and output the digital signal to the speech processing section 16.

The D/A converting section 15 is configured to convert, into an analog signal, the digital speech signal (second speech signal) input from the speech processing section 16. The speech signal that has been converted into the analog signal by the D/A converting section 15 is amplified by an amplifier, and then is input to the speaker 12. Then, a voice is output from the speaker 12.

The speech processing section 16 includes a first processing section 17 for processing a speech signal on the transmission side, and a second processing section 18 for processing a speech signal on the receipt side.

The first processing section 17 includes a first signal processing section 171, a speech compression section 172, a buffer 173, an encryption section 174, and a packetization section 175. The first signal processing section 171 is configured to perform automatic volume adjustment or the like to adjust the volume level of the speech signal input from the A/D converting section 14. The speech compression section 172 is configured to compress the speech signal input from the first signal processing section 171, and accumulate it in the buffer 173. The encryption section 174 is configured to encrypt the speech signal taken from the buffer 173 according to a predetermined encryption rule. The packetization section 175 is configured to divide (packetizes) the speech signal encrypted by the encryption section 174 to create speech packets, and radio-transmit them from the RF transmission section 19.

The second processing section 18 includes a second signal processing section 181, a speech decompression section 182, a buffer 183, a decryption section 184, and an unpacketization section 185. The unpacketization section 185 is configured to unpacketize (disorganize) the radio signal (speech packet) received by the RF receipt section 20. The decryption section 184 is configured to decrypt the speech signal unpacketized by the unpacketization section 185, and accumulate it in the buffer 183. The speech decompression section 182 is configured to take the speech signal from the buffer 183, and decompress the speech signal. The second signal processing section 181 is configured to perform a predetermined processing such as volume adjustment and packet loss compensation of the speech signal input from the speech decompression section 182, and then output the processed speech signal to the D/A converting section 15.

Each of the RF transmission section 19 and RF receipt section 20 includes a low-power radio communication module that requires no license. Regarding this type of low-power radio communication module, specifications such as a frequency band or antenna power used are stipulated in each country depending on the application or the like. For example, Europe uses a communication module using electric waves of a 868 MHz band (868.0 MHz to 868.6 MHz). Japan uses a communication module for a telemeter using electric waves of a 430 MHz band (410 MHz to 430 MHz) and a communication module for a sensor network using electric waves of a 920 MHz band (915 MHz to 928 MHz). The RF transmission section 19 and RF receipt section 20 may be communication modules compliant with a DECT (digital enhanced cordless telecommunications) model. The RF transmission section 19 and RF receipt section 20 may be communication modules compliant with a WiFi (wireless fidelity) model (registered trademark).

In the voice-call terminal 1, when a voice is input to the microphone 11, a speech signal (first speech signal) output from the microphone 11 is amplified by the amplifier and is converted into a digital signal by the A/D converting section 14. Then, the digital signal is speech-compressed, encrypted, and packetized by the first processing section 17. Then, a speech packet output from the first processing section 17 is radio-transmitted via the antenna 21 by the RF transmission section 19.

Meanwhile, when the RF receipt section 20 receives a radio signal including a speech packet via the antenna 21, the speech packet included in the radio signal is unpacketized, decrypted, and speech-decompressed by the second processing section 18, and is output to the D/A converting section 15. A speech signal (second speech signal) output from the second processing section 18 is converted into an analog signal by the D/A converting section 15, is amplified by the amplifier, and then is input to the speaker 12. Then, a voice is output from the speaker 12.

The speech compression section 172 and speech decompression section 182 constitute a compression/decompression section, and the encryption section 174 and decryption section 184 constitute an encryption/decryption section. The first signal processing section 171, second signal processing section 181, compression/decompression section, encryption/decryption section, packetization section 175, and unpacketization section 185 are realized by executing a built-in program with a computer (e.g. microcomputer).

The monitoring terminal 2 is installed in the residence 100, and is configured to detect the presence or absence of an abnormality that damages the security of the residence 100. The monitoring terminal 2 has a low-power radio communication module that requires no license. When detecting the occurrence of an abnormality, the monitoring terminal 2 is configured to radio-transmit a monitoring signal for reporting the occurrence of the abnormality to the gateway 3. Examples of the monitoring terminal 2 include a fire detector for detecting a fire, a gas detector for detecting a combustible gas such as methane or an incomplete combustion gas such as carbon monoxide, a temperature sensor, and a security sensor for detecting the presence or absence of the intrusion into the residence 100. There are variable security sensors. Examples of the security sensor include an opening/closing sensor for detecting the opening or closing of an entrance door or windowpane, a break detection sensor for detecting a break of a windowpane, a pyroelectric human detection sensor for detecting heat rays radiated from a human, and a sensor camera that processes an image of a security camera to detect the presence or absence of the intrusion. Types and the number of monitoring terminals 2 may be changed appropriately as necessary.

The gateway 3 is installed in the residence 100, and radio-communicates with the voice-call terminal 1 and with the monitoring terminal 2. The gateway 3 is connected to a public telecommunications network 200 such as the Internet or GSM (global system for mobile communications). The gateway 3 communicates with the CMS server 5 via the public telecommunications network 200.

The monitoring device 4 is managed by the company that provides the security service. Operators of the monitoring device 4 take turns to wait for the reports from the voice-call terminal 1 so that all of the reports can be received.

The CMS server 5 is connected to the public telecommunications network 200, and communicates with the gateway 3 via the public telecommunications network 200. The CMS server 5 is configured to transfer, to the monitoring device 4, data that is transmitted from the gateway 3 via the public telecommunications network 200 and is based on the monitoring information of the monitoring terminal 2, and transfer, to the gateway 3, data including a control command transmitted from the monitoring device 4.

The voice-call system of the present embodiment includes a communication terminal 6 connectable to the public telecommunications network 200. The communication terminal 6 is a portable phone used by a resident of the residence 100, for example. The communication terminal 6 is configured to be capable of performing communication via the public telecommunications network 200, and has a function of receiving an e-mail via the public telecommunications network 200. As a notification destination to which an abnormality is reported when the abnormality occurs in the residence 100, address information (e-mail address or the like), for example, of the communication terminal 6 used by the resident of the residence 100 is previously registered in a storage device of the CMS server 5. Address information (IP (Internet protocol) address) of the gateway 3 installed in the residence 100 in which the resident carrying the communication terminal 6 lives is previously registered in the storage device of the CMS server 5 in association with the address information of the communication terminal 6. The communication terminal 6 is not limited to the portable phone. The communication terminal 6 may be a smartphone, personal computer, or tablet terminal as long as it can receive an e-mail via the public telecommunications network 200.

Next, the operation of the voice-call system of the present embodiment is described.

In the voice-call system of the present embodiment, if an abnormality such as an emergency situation or sudden illness occurs, a resident staying in the residence 100 can use the voice-call terminal 1 to report the abnormality by voice to an operator who operates the monitoring device 4.

When the resident staying in the residence 100 operates the operation section 13 of the voice-call terminal 1, an operation signal is input from the operation section 13 to the control section 10. In response to this operation signal, the control section 10 starts a voice call operation. In other words, when receiving the operation signal from the operation section 13, the control section 10 sets an operation state of speech processing section 16 at a transmission state, and makes the RF transmission section 19 start the transmission of a speech signal. A voice spoken by the resident is converted into an electric signal by the microphone 11, and the speech signal is compressed, encrypted, and packetized by the first processing section 17. Then, the speech signal is radio-transmitted from the RF transmission section 19 to the gateway 3. When the gateway 3 receives a speech packet radio-transmitted from the voice-call terminal 1, the gateway 3 transmits the speech packet to the CMS server 5 via the public telecommunications network 200. When the CMS server 5 receives the speech packet from the gateway 3 via the public telecommunications network 200, the CMS server 5 outputs, to the monitoring device 4, the received speech packet and the address information of the gateway as the transmission source. At this time, the monitoring device 4 notifies, by sound, display, light or the like, the operator of the arrival of the voice call from the voice-call terminal 1, and unpacketizes, decrypts, and decompresses the speech packet transmitted from the voice-call terminal 1, and then outputs a voice from a speaker or headset.

When the resident in the residence 100 operates the operation section 13 of the voice-call terminal 1, the voice input to the microphone 11 is output from the monitoring device 4. Therefore, the resident in the residence 100 can notify the operator of the monitoring device 4 by voice solely by pressing, once, the operation section 13 including a push button, for example.

When the operator of the monitoring device 4 responds to a call from the resident, the voice of the operator is converted into an electric signal (speech signal) by a microphone of the monitoring device 4. The monitoring device 4 compresses, encrypts, and packetizes the speech signal of the operator, and then transmits the speech signal to the CMS server 5. The CMS server 5 transmits the speech signal (speech packet) transmitted from the monitoring device 4 to the gateway 3. The gateway 3 transmits, to the voice-call terminal 1, the speech packet transmitted from the CMS server 5. The voice-call terminal 1 unpacketizes, decrypts, and decompresses the speech packet received from the gateway 3, and then outputs a voice from the speaker 12. Thus, the operator of the monitoring device 4 can communicate with the resident staying in the residence 100.

When the monitoring terminal 2 installed in the residence 100 detects the occurrence of an abnormality, the monitoring terminal 2 outputs an audible alarm from a built-in speaker, for example, to notify a person around it of the occurrence of the abnormality, and radio-transmits the monitoring information of the occurring abnormality to the gateway 3.

When receiving the monitoring information from the monitoring terminal 2, the gateway 3 transmits the monitoring information to the CMS server 5 via the public telecommunications network 200. The gateway 3 radio-transmits, to the voice-call terminal 1, a control signal for putting the voice-call terminal 1 into the transmission state, thereby forcibly setting the operation state of the voice-call terminal 1 at the transmission state.

When receiving the monitoring information from the gateway 3, the CMS server 5 automatically creates an e-mail for reporting the occurrence of the abnormality based on the monitoring information. The CMS server 5 reads, from the storage device, the e-mail address of the communication terminal 6 corresponding to the gateway 3 as the transmission source, and automatically transmits the created e-mail to the e-mail address. This e-mail includes the detection time of the abnormality, the information related to the residence 100 where the abnormality has occurred, and the specific contents of the abnormality, for example. Therefore, by checking the received e-mail with the communication terminal 6, a resident out of the residence 100 can recognize the occurrence of the abnormality in the residence 100 and the contents of the occurring abnormality.

When the resident out of the residence 100 uses the communication terminal 6 to check the e-mail that reports the occurrence of the abnormality, in order to recognize the situation of the residence 100 in more detail, the resident accesses the CMS server 5 with the communication terminal 6 and reads a web page for users of the security service. The web page shows an icon, and the resident receives, with the icon, the voice collected by the voice-call terminal 1 disposed in the corresponding residence 100. When the resident carrying the communication terminal 6 operates the icon for receipt, a control command corresponding to the operation is transmitted from the communication terminal 6 to the CMS server 5. When receiving the control command, the CMS server 5 reads, from the storage device, the address information of the gateway 3 corresponding to the communication terminal 6 as the transmission source, and transmits, to the gateway 3, a control signal (control command) for transmitting a speech signal (first speech signal) from the voice-call terminal 1 to the CMS server 5. When receiving the control signal from the CMS server 5, the gateway 3 transmits the received control signal to the corresponding voice-call terminal 1. When the voice-call terminal 1 being in the transmission state transmits the speech signal (speech packet) to the gateway 3, the gateway 3 transmits, to the CMS server 5, the speech packet transmitted from the voice-call terminal 1. When receiving the speech packet from the gateway 3, the CMS server 5 transfers it to the communication terminal 6 as a request source via the public telecommunications network 200. Thus, the resident can hear, with the communication terminal 6, the voice collected by the voice-call terminal 1.

In the above-mentioned operation, the resident out of the residence 100 can hear, with the communication terminal 6, the voice collected by the voice-call terminal 1 disposed in the residence 100. In addition, the voice input to the communication terminal 6 can be output from the voice-call terminal 1.

When the resident out of the residence 100 intends to speak to a person staying in the residence 100 via the voice-call terminal 1, the resident out of the residence 100 operates the communication terminal 6 to access the CMS server 5 and reads a web page for users of the security service. The web page shows an icon, and the resident out of the residence 100 changes, with the icon, the communication direction of the speech signal in the voice-call terminal 1 disposed in the residence 100 corresponding to the communication terminal 6 that has accessed the CMS server 5. When the resident carrying the communication terminal 6 operates the icon for changing the communication direction, the control command corresponding to the operation is transmitted from the communication terminal 6 to the CMS server 5. When receiving the control command, the CMS server 5 transmits the control signal (control packet) for changing the communication direction of the speech signal in the voice-call terminal 1 to the gateway 3 via the public telecommunications network 200. When receiving the control signal from the CMS server 5, the gateway 3 transmits the control signal to the voice-call terminal 1. When the voice-call terminal 1 switches the communication direction from the transmission state to the receipt state in response to the control signal from the gateway 3, the voice-call terminal 1 transmits a signal indicating the completion of the receipt preparation to the gateway 3. This signal is transmitted from the gateway 3 to the CMS server 5. When receiving the signal indicating the completion of the receipt preparation, the CMS server 5 displays, on the web page, a message indicating the completion of the receipt preparation on the voice-call terminal 1 side and an icon operated to start the transmission. When the resident carrying the communication terminal 6 sees the indication of the completion of the receipt preparation on the display screen of the communication terminal 6, the resident operates the icon for starting the transmission using the communication terminal 6. At this time, the command corresponding to the operation is transmitted from the communication terminal 6 to the CMS server 5, and the CMS server 5 transfers, to the gateway 3 side, the speech data transmitted from the communication terminal 6. The voice spoken by the resident carrying the communication terminal 6 is converted into an electric signal (speech signal) by the microphone of the communication terminal 6. The communication terminal 6 compresses, encrypts, and packetizes the speech signal (second speech signal), and then transmits the speech signal to the CMS server 5 via the public telecommunications network 200. When receiving the speech signal from the communication terminal 6, the CMS server 5 transmits the received speech signal to the gateway 3 via the public telecommunications network 200. The gateway 3 transmits the received speech signal to the voice-call terminal 1, and outputs it from speaker 12 of the voice-call terminal 1. Thus, when the voice spoken by the resident carrying the communication terminal 6 is input to the microphone of the communication terminal 6, the speech signal is transmitted to the voice-call terminal 1 in the residence 100, and a voice is output from the voice-call terminal 1. Therefore, the resident carrying the communication terminal 6 can communicate with the resident staying in the residence 100.

As discussed above, the voice-call system of the present embodiment includes a voice-call terminal 1, a gateway 3, a monitoring device 4, and a CMS server 5 as a server device. The gateway 3 is configured to collect monitoring information from a monitoring terminal 2 installed in the residence 100. The voice-call terminal 1 includes a microphone 11, a speaker 12, and an operation section 13 operated to start a notification by voice. The monitoring device 4 is used by a company that provides the security service. The CMS server 5 is configured to relay communication between the gateway 3 and monitoring device 4. The CMS server 5 is configured to transfer, to the monitoring device 4, data based on the monitoring information transmitted from the gateway 3, and transfer, to the gateway, data including a control command transmitted from the monitoring device 4. When the operation section 13 is operated, the voice-call terminal 1 is configured to transmit, to the gateway 3, a first speech signal converted into an electric signal by the microphone 11, and output, from the speaker 12, a second speech signal transmitted from the monitoring device 4 via the CMS server 5 and gateway 3. Thus, a resident staying in the residence 100 can notify an operator of the monitoring device 4 by voice with a simple operation.

In the voice-call system of the present embodiment, preferably, the communication method between the voice-call terminal 1 and the gateway 3 is a short-range radio communication method that requires no license. In this case, the constraint of the using place of the voice-call terminal 1 in the residence 100 is low.

In the voice-call system of the present embodiment, preferably, the communication method between the monitoring device 4 and the CMS server 5 (server device) is a data communication method using a public telecommunications network 200. In this case, communication can be performed using an existing public telecommunications network 200.

Preferably, the voice-call system of the present embodiment includes a communication terminal 6 coupled to the CMS server 5 via the public telecommunications network 200, and the gateway 3 and communication terminal 6 are configured so that data including the first or second speech signal is transmitted and received between the gateway 3 and communication terminal 6 via the CMS server 5. In this case, the transmission and receipt of data including the first or second speech signal are allowed between the voice-call terminal 1 disposed in the residence 100 and the communication terminal 6, so that a person who uses the voice-call terminal 1 in the residence 100 can communicate with a resident carrying the communication terminal 6 out of the residence 100.

In the voice-call system of the present embodiment, preferably, the gateway 3 and the voice-call terminal 1 are configured to packetize the first or second speech signal to communicate with each other, and the gateway 3 is configured to change the packet size of the first or second speech signal. For example, when the gateway 3 reduces the packet size, the first or second speech signal is hardly affected by a communication noise and the occurrence probability of packet loss can be reduced.

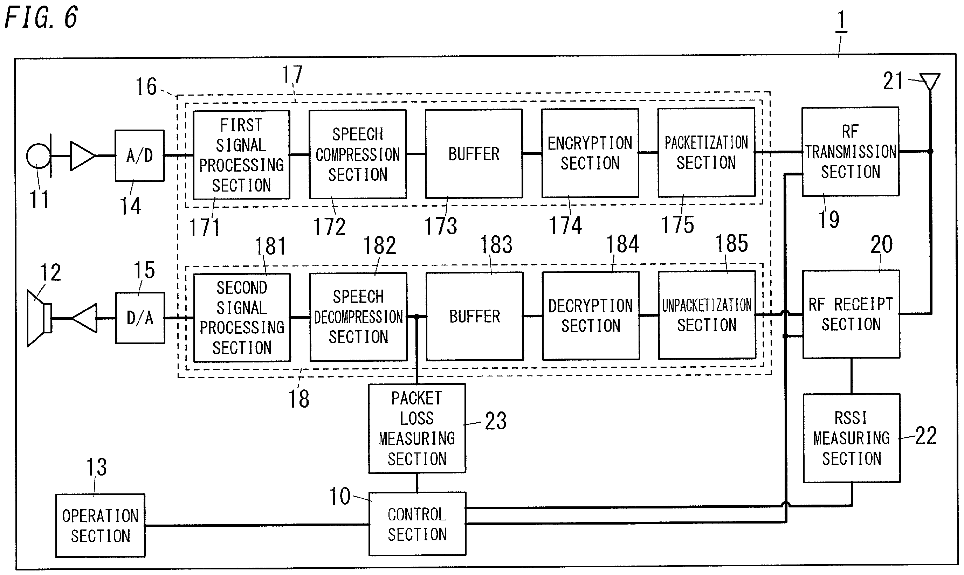

For example, as shown in Fig. 6, the voice-call terminal 1 may further include an RSSI (received signal strength indication) measuring section 22 that measures the received signal strength of a radio signal received by the RF receipt section 20. The control section 10 is configured to make the RF transmission section 19 transmit, to the gateway 3, a measurement result by the RSSI measuring section 22 obtained while the RF receipt section 20 receives an electric signal. The gateway 3 is configured to change the packet size of the first or second speech signal based on a received signal strength measured by the voice-call terminal 1. For example, the gateway 3 is configured to change the packet size of the first or second speech signal so that the packet size decreases with decrease in received signal strength measured by the voice-call terminal 1. Thus, the occurrence of packet loss can be suppressed.

For example, as shown in Fig. 6, the voice-call terminal 1 may further include a packet loss measuring section 23 that measures the packet loss rate of the speech packet received by the RF receipt section 20. The control section 10 is configured to make the RF transmission section 19 transmit, to the gateway 3, a measurement result by the packet loss measuring section 23 obtained while the RF receipt section 20 receives an electric signal. The gateway 3 is configured to change the packet size of the first or second speech signal based on the packet loss rate measured by the voice-call terminal 1. For example, the gateway 3 is configured to change the packet size of the first or second speech signal so that the packet size decreases with increase in packet loss rate measured by the voice-call terminal 1. Thus, the occurrence of packet loss can be suppressed.

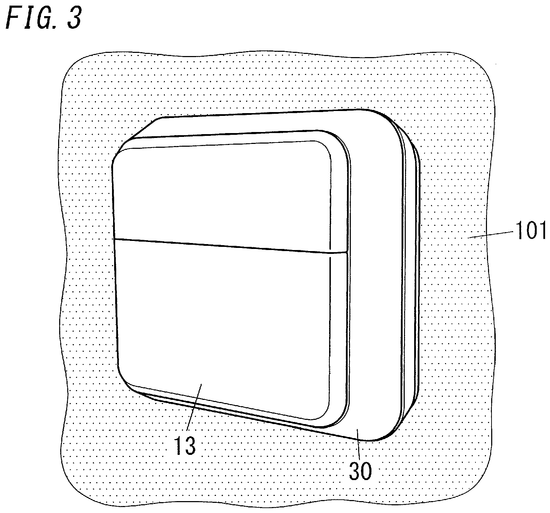

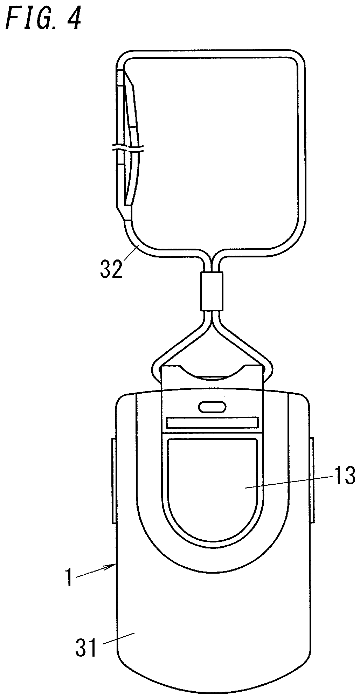

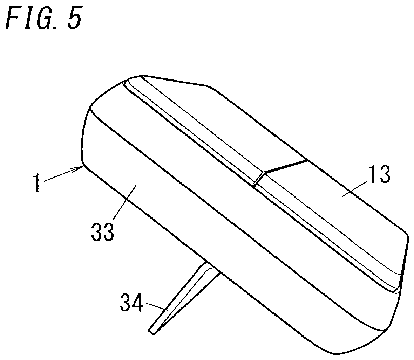

Examples of the type of the voice-call terminal 1 include a wall-mounted type shown in Fig. 3, a pendant (portable) type shown in Fig. 4, and a standing (stand) type shown in Fig. 5.

A wall-mounted voice-call terminal 1, as shown in Fig. 3, includes a body 30 with a box shape where the size of the thickness direction is smaller than those of the longitudinal and lateral directions. The circuit described in the block diagram of Fig. 2 is accommodated in the body 30. The back surface of the body 30 has a bracket configured to be detachably attached to fittings fixed on a wall 101, for example. An operation section 13 is disposed on a lower side of the front surface of the body 30 in the attached state of the body 30 to the wall 101.

When a wall-mounted voice-call terminal 1 is employed, the voice-call terminal 1 can be used in a state where it is attached on the wall 101. The method of attaching the body 30 to the wall 101 is not limited to the above-mentioned method. Any method can be employed as long as the body 30 can be attached to the wall 101. For example, the body 30 may be stuck on the wall 101 with adhesive tape, may be attached to the wall 101 with a suction cup disposed on the back surface side of the body 30, or may be attached to the wall 101 by a magnetic force of a magnet disposed on the back surface side of the body 30.

A pendant type voice-call terminal 1, as shown in Fig. 4, includes a body 31 with a box shape where the size of the thickness direction is smaller than those of the longitudinal and lateral directions. The circuit described in the block diagram of Fig. 2 is accommodated in the body 31, and an operation section 13 is disposed on the front surface of the body 31. A string 32 for suspension is attached to a top part of the body 31. A resident can dangle the body 31 from his/her neck by putting the string 32 around the neck, for example. Thus, when a pendant type voice-call terminal 1 is employed, the voice-call terminal 1 can be used in a dangled state from the neck, for example.

A standing type voice-call terminal 1, as shown in Fig. 5, includes a body 33 with a box shape where the size of the thickness direction is smaller than those of the longitudinal and lateral directions, and a plate-like leg 34 projecting obliquely downward from the back surface of the body 33. The circuit described in the block diagram of Fig. 2 is accommodated in the body 33, and an operation section 13 is disposed on the front surface of the body 33. The body 33 is configured to stand on a table or desk, for example, in a state where a lower part of the body 33 and the leg 34 are in contact with the table or desk. Thus, when the standing type voice-call terminal 1 is employed, the voice-call terminal 1 can be placed on a desired place for use.

The shape of the voice-call terminal 1 is not limited to the above-mentioned ones, but may be changed appropriately.

The voice-call system of the present embodiment, preferably, includes a plurality of voice-call terminals 1 that are disposed in the residence 100, and the gateway 3 is configured so that both of unicast communication and multicast communication are allowed between the gateway 3 and each of the plurality of voice-call terminals 1. In the unicast communication, an individual unicast address assigned to each voice-call terminal 1 is used. In the multicast communication, a multicast address whose transmission destination is all voice-call terminals 1 is used, so that data can be transmitted to all voice-call terminals 1 by one communication.

The voice-call system of the present embodiment is applicable to a plurality of residences 100. In each of residences 100, a voice-call terminal 1 and gateway 3 are disposed. When the operation section 13 of the voice-call terminal 1 disposed in any residence 100 is operated, a first speech signal transmitted from the voice-call terminal 1 is transferred to the monitoring device 4 via the gateway 3 and CMS server 5. Therefore, a resident in the residence 100 can report an abnormality by voice to an operator of the monitoring device 4. In addition, when a second speech signal is transmitted from the monitoring device 4 to the voice-call terminal 1 in the corresponding residence 100 via the CMS server 5 and gateway 3, the voice-call terminal 1 makes the speaker 12 output, by voice, the received speech signal.

## Claims

1. A voice-call system comprising:
a gateway (3) configured to collect monitoring information from a monitoring terminal (2) installed in a residence (100), the monitoring terminal (2) is configured to detect the presence or absence of an abnormality, wherein when detecting the occurrence of an abnormality, the monitoring terminal (2) is configured to transmit the monitoring information for reporting the occurrence of the abnormality to the gateway (3);
at least one voice-call terminal (1) including an operation section (13) operated to start a notification by voice, a microphone (11), and a speaker (12);
a monitoring device (4) used by a company that provides security service; and
a server device (5) configured to relay communication between the gateway (3) and the monitoring device (4),
wherein, when receiving the monitoring information from the monitoring terminal (2), the gateway (3) is configured to transmit the monitoring information to the server device (5), and the gateway (3) is configured to transmit to the voice-call terminal (1), a control signal for putting the voice-call terminal (1) into a transmission state,
wherein the server device (5) is configured to transfer, to the monitoring device (4), data based on the monitoring information transmitted from the gateway (3), and transfer, to the gateway (3), data including a control command transmitted from the monitoring device (4), and
wherein, when the voice-call terminal (1) is put into a transmission state, the voice-call terminal (1) is configured to transmit, to the monitoring device (4) via the gateway (3) and the server device (5), a first speech signal converted into an electric signal by the microphone (11), and output, by voice from the speaker (12), a second speech signal transmitted from the monitoring device via the server device (5) and the gateway (3).

2. The voice-call system according to claim 1, wherein a communication method between the voice-call terminal (1) and the gateway (3) is a short-range radio communication method that requires no license.

3. The voice-call system according to claim 1 or 2, wherein
a communication method between the monitoring device (4) and the server device (5) is a data communication method using a public telecommunications network.

4. The voice-call system according to any one of claims 1 to 3, further comprising a communication terminal (6) coupled to the server device via a public telecommunications network (200),
wherein the gateway (3) and the communication terminal (6) are configured so that data including the first or second speech signal is transmitted and received between the gateway (3) and the communication terminal (6) via the server device (5).

5. The voice-call system according to any one of claims 1 to 4, wherein
the gateway (3) and the voice-call terminal (1) are configured to packetize the first or second speech signal to communicate with each other, and
the gateway (3) is configured to change a packet size of the first or second speech signal.

6. The voice-call system according to claim 5, wherein
radio communication is performed between the gateway (3) and the voice-call terminal (1), and
the gateway (3) is configured to change a packet size of the first or second speech signal based on a received signal strength measured by the voice-call terminal (1).

7. The voice-call system according to claim 5, wherein
the gateway (3) is configured to change a packet size of the first or second speech signal based on a packet loss rate measured by the voice-call terminal (1).

8. The voice-call system according to any one of claims 1 to 7, wherein
a type of the voice-call terminal (1) is any one of a wall-mounted type, a pendant type having a string for suspension, and a standing type.

9. The voice-call system according to any one of claims 1 to 8, wherein
the voice-call terminal (1) comprises a plurality of voice-call terminals that are disposed in the residence (100), and
the gateway (3) is configured so that both of unicast communication and multicast communication are allowed between the gateway (3) and each of the plurality of voice-call terminals.

## Patentansprüche

1. Sprachanrufsystem, aufweisend:
ein Gateway (3), das dafür ausgelegt ist, Überwachungsinformationen von einem Überwachungsendgerät (2) zu sammeln, das in einem Wohnort (100) installiert ist, wobei das Überwachungsendgerät (2) dafür ausgelegt ist, das Vorhandensein oder Fehlen einer Anomalie zu erfassen, wobei das Überwachungsendgerät (2) bei einem Erkennen des Auftretens einer Anomalie dafür ausgelegt ist, die Überwachungsinformationen zur Meldung des Auftretens der Anomalie an das Gateway (3) zu übertragen;
mindestens ein Sprachanruf-Endgerät (1), das einen Betätigungsabschnitt (13), der zum Starten einer Benachrichtigung durch Sprache betätigt wird, ein Mikrofon (11) und einen Lautsprecher (12) enthält;
eine Überwachungsvorrichtung (4), die von einem Unternehmen verwendet wird, das einen Sicherheitsdienst bereitstellt; und
eine Servervorrichtung (5), die dafür ausgelegt ist, eine Kommunikation zwischen dem Gateway (3) und der Überwachungsvorrichtung (4) zu übertragen,
wobei das Gateway (3) beim Empfangen der Überwachungsinformationen von dem Überwachungsendgerät (2) dafür ausgelegt ist, die Überwachungsinformationen an die Servervorrichtung (5) zu übertragen, und das Gateway (3) dafür ausgelegt ist, an das Sprachanruf-Endgerät (1) ein Steuersignal zu übertragen, um das Sprachanruf-Endgerät (1) in einen Übertragungszustand zu versetzen,
wobei die Servervorrichtung (5) dafür ausgelegt ist, an die Überwachungsvorrichtung (4) Daten zu übertragen, die auf den von dem Gateway (3) übertragenen Überwachungsinformationen basieren, und an das Gateway (3) Daten zu übertragen, die einen von der Überwachungsvorrichtung (4) übertragenen Steuerbefehl enthalten, und
wobei, wenn das Sprachanruf-Endgerät (1) in einen Übertragungszustand versetzt wird, das Sprachanruf-Endgerät (1) dafür ausgelegt ist, ein erstes Sprachsignal, das durch das Mikrofon (11) in ein elektrisches Signal umgewandelt wird, über das Gateway (3) und die Servervorrichtung (5) an die Überwachungsvorrichtung (4) zu übertragen, und ein zweites Sprachsignal, das von der Überwachungsvorrichtung über die Servervorrichtung (5) und das Gateway (3) übertragen wird, durch Sprache aus dem Lautsprecher (12) auszugeben.

2. Sprachanrufsystem nach Anspruch 1, wobei
ein Kommunikationsverfahren zwischen dem Sprachanruf-Endgerät (1) und dem Gateway (3) ein Kurzstrecken-Funkkommunikationsverfahren ist, das keine Lizenz erfordert.

3. Sprachanrufsystem nach Anspruch 1 oder 2, wobei
ein Kommunikationsverfahren zwischen der Überwachungsvorrichtung (4) und der Servervorrichtung (5) ein Datenkommunikationsverfahren ist, das ein öffentliches Telekommunikationsnetz verwendet.

4. Sprachanrufsystem nach einem der Ansprüche 1 bis 3, das ferner ein Kommunikationsendgerät (6) aufweist, das über ein öffentliches Telekommunikationsnetz (200) mit der Servervorrichtung verbunden ist,
wobei das Gateway (3) und das Kommunikationsendgerät (6) so ausgelegt sind, dass Daten, die das erste oder zweite Sprachsignal enthalten, zwischen dem Gateway (3) und dem Kommunikationsendgerät (6) über die Servervorrichtung (5) übertragen und empfangen werden.

5. Sprachanrufsystem nach einem der Ansprüche 1 bis 4, wobei
das Gateway (3) und das Sprachanruf-Endgerät (1) dafür ausgelegt sind, das erste oder zweite Sprachsignal zu bündeln, um miteinander zu kommunizieren, und
das Gateway (3) dafür ausgelegt ist, eine Paketgröße des ersten oder zweiten Sprachsignals zu ändern.

6. Sprachanrufsystem nach Anspruch 5, wobei
eine Funkkommunikation zwischen dem Gateway (3) und dem Sprachanruf-Endgerät (1) durchgeführt wird, und
das Gateway (3) dafür ausgelegt ist, eine Paketgröße des ersten oder zweiten Sprachsignals basierend auf einer empfangenen Signalstärke, die von dem Sprachanruf-Endgerät (1) gemessen ist, zu ändern.

7. Sprachanrufsystem nach Anspruch 5, wobei
das Gateway (3) dafür ausgelegt ist, eine Paketgröße des ersten oder zweiten Sprachsignals basierend auf einer Paketverlustrate, die von dem Sprachanruf-Endgerät (1) gemessen ist, zu ändern.

8. Sprachanrufsystem nach einem der Ansprüche 1 bis 7, wobei
ein Typ des Sprachanruf-Endgerätes (1) einer von einem Wandmontagetyp, einem Hängetyp mit einer Schnur zum Aufhängen und einem Standtyp ist.

9. Sprachanrufsystem nach einem der Ansprüche 1 bis 8, wobei
das Sprachanruf-Endgerät (1) mehrere Sprachanruf-Endgeräte beinhaltet, die in der Wohnung (100) angeordnet sind, und das Gateway (3) so ausgelegt ist, dass sowohl eine Unicast-Kommunikation als auch eine Multicast-Kommunikation zwischen dem Gateway (3) und jedem der mehreren Sprachanruf-Endgeräten zulässig sind.

## Revendications

1. Système d'appel vocal comprenant :
une passerelle (3) configurée de manière à collecter des informations de surveillance à partir d'un terminal de surveillance (2) installé dans une résidence (100), dans lequel le terminal de surveillance (2) est configuré de manière à détecter la présence ou l'absence d'une anomalie, dans lequel, lors de la détection de l'occurrence d'une anomalie, le terminal de surveillance (2) est configuré de manière à transmettre les informations de surveillance afin de signaler l'occurrence de l'anomalie à la passerelle (3) ;
au moins un terminal d'appel vocal (1) incluant une section d'opération (13) exploitée pour démarrer une notification par la voix, un microphone (11), et un haut-parleur (12) ;
un dispositif de surveillance (4) utilisé par une entreprise qui fournit un service de sécurité ; et
un dispositif serveur (5) configuré de manière à relayer une communication entre la passerelle (3) et le dispositif de surveillance (4) ;
dans lequel, lors de la réception des informations de surveillance en provenance du terminal de surveillance (2), la passerelle (3) est configurée de manière à transmettre les informations de surveillance au dispositif serveur (5), et la passerelle (3) est configurée de manière à transmettre, au terminal d'appel vocal (1), un signal de commande visant à mettre le terminal d'appel vocal (1) dans un état de transmission ;
dans lequel le dispositif serveur (5) est configuré de manière à transférer, au dispositif de surveillance (4), des données basées sur les informations de surveillance transmises à partir de la passerelle (3), et à transférer, à la passerelle (3), des données incluant une instruction de commande transmise à partir du dispositif de surveillance (4) ; et
dans lequel, lorsque le terminal d'appel vocal (1) est mis dans un état de transmission, le terminal d'appel vocal (1) est configuré de manière à transmettre, au dispositif de surveillance (4), par l'intermédiaire de la passerelle (3) et du dispositif serveur (5), un premier signal de parole converti en un signal électrique par le microphone (11), et à fournir en sortie, par le biais d'une voix en provenance du haut-parleur (12), un second signal de parole transmis à partir du dispositif de surveillance par l'intermédiaire du dispositif serveur (5) et de la passerelle (3).

2. Système d'appel vocal selon la revendication 1, dans lequel :
un procédé de communication entre le terminal d'appel vocal (1) et la passerelle (3) est un procédé de communication radio à courte portée qui ne nécessite aucune licence.

3. Système d'appel vocal selon la revendication 1 ou 2, dans lequel :
un procédé de communication entre le dispositif de surveillance (4) et le dispositif serveur (5) est un procédé de communication de données faisant appel à un réseau de télécommunication public.

4. Système d'appel vocal selon l'une quelconque des revendications 1 à 3, comprenant en outre un terminal de communication (6) couplé au dispositif serveur par l'intermédiaire d'un réseau de télécommunication public (200) ;
dans lequel la passerelle (3) et le terminal de communication (6) sont configurés de sorte que des données incluant le premier signal de parole ou le second signal de parole sont transmises et reçues entre la passerelle (3) et le terminal de communication (6) par l'intermédiaire du dispositif serveur (5).

5. Système d'appel vocal selon l'une quelconque des revendications 1 à 4, dans lequel :
la passerelle (3) et le terminal d'appel vocal (1) sont configurés de manière à mettre en paquet le premier signal de parole ou le second signal de parole afin de communiquer entre eux ; et
la passerelle (3) est configurée de manière à modifier une taille de paquet du premier signal de parole ou du second signal de parole.

6. Système d'appel vocal selon la revendication 5, dans lequel :
une communication radio est mise en oeuvre entre la passerelle (3) et le terminal d'appel vocal (1) ; et
la passerelle (3) est configurée de manière à modifier une taille de paquet du premier signal de parole ou du second signal de parole sur la base d'une intensité de signal reçu mesurée par le terminal d'appel vocal (1).

7. Système d'appel vocal selon la revendication 5, dans lequel :
la passerelle (3) est configurée de manière à modifier une taille de paquet du premier signal de parole ou du second signal de parole sur la base d'un taux de perte de paquets mesuré par le terminal d'appel vocal (1).

8. Système d'appel vocal selon l'une quelconque des revendications 1 à 7, dans lequel :
un type du terminal d'appel vocal (1) correspond à l'un quelconque parmi un type à fixation murale, un type suspendu avec une corde de suspension, et un type en position verticale.

9. Système d'appel vocal selon l'une quelconque des revendications 1 à 8, dans lequel :
le terminal d'appel vocal (1) comprend une pluralité de terminaux d'appel vocal qui sont disposés dans la résidence (100) ; et
la passerelle (3) est configurée de sorte que, tant une communication à diffusion individuelle qu'une communication à multidiffusion sont autorisées entre la passerelle (3) et chaque terminal de la pluralité de terminaux d'appel vocal.
